# EUROPEAN PATENT APPLICATION

(11) **EP 1 867 537 A1**
(43) Date of publication of application: **19.12.2007**
(21) Application number: 07110234.7
(22) Date of filing: 14.06.2007
(51) Int. Cl.: B60R 25/00, F16H 61/22

(54) **An electromechanical device for locking the gearbox selector of a vehicle, and a method for its operation**

(30) Priority: 15.06.2006 IL 17632906
(71) Applicant: Jackoby, Yair, Reno NV 89509 (US)
(72) Inventor: Jackoby, Yair, Reno NV 89509 (US)
(74) Representative: Lewicka, Katarzyna Dorota

(57) **Abstract**

An electromechanical vehicle theft protection device for the vehicle of a user. The device includes a screw feed nut (202), which extends and retracts along a screw feed bolt (203). The device also includes a geared motor (214), operable to pull and push said screw feed nut and a flexible metal cable (208) operable to pull and push along a metal tube (205), thereby extending and retracting a locking pin in and out of the metal tube, and thereby releasing and blocking the gear shift selector of the vehicle, wherein the electromechanical vehicle theft protection device is mounted under the hood of the vehicle, such that access to and defeat of the electromechanical vehicle theft protection device is difficult.

## Description

### Technical Field

The present invention generally relates to automotive gearbox selector locks, and more particularly, to a device and method for locking an automotive gearbox selector "under the hood," at the gear selection lever itself, the closest mechanical component to the gearbox, whether the transmission is automatic or manual.

### Background Art

Gearshift locks have been used for increasing security of a car for many years. A conventional gearshift lock as includes a bracket, which defines a slot and is firmly mounted on a gearshift seat of the car beside the gearshift, and a U-shaped (or strait locking pin) latch enclosing a lower portion of the gearshift. The lock can be disengaged from the slot of the bracket. The U-shaped latch is disengaged from the bracket by means of a key. This conventional lock is simple and has been used for a period of time. However, a thief can easily cut off the gearshift from a lower portion beneath the U-shaped latch with a saw or other tools. Then he can use a hook or the like to operate the remaining portion of the gearshift. Moreover, cars used at the present time are usually provided with a remote control to open the various locks, therefore the conventional gearshift lock should preferably be improved for integration with the remote control.

Several US patents disclose gearshift locks. For example, US Pat. No. 5,561,996, to Chang, issued October 8, 1996, describes a gearshift lock used to prevent a gearshift from moving with respect to a gearshift seat from which the gearshift extends. The gearshift lock includes a locking box firmly attached on the gearshift seat and includes two passages therein. Two first springs each are respectively received in a corresponding one of the passages of the locking box. A U-shaped latch includes a curved rod and two prongs each of which is received in a corresponding passage of the locking box. A motor is positioned in the locking box and includes a toothed rotor head. A spring-biased engaging device is positioned in the locking box and engaged to the two prongs of the U-shaped latch thus limiting the two prongs of the U-shaped latch in the passages of the locking box and the curved rod of the U-shaped latch enclosing the gearshift thus preventing the gearshift from being moved. A control circuit functions to drive the motor in response to a reception of an effective control signal from a remote control. The motor rotates to drive the spring-biased engaging device to disengage from the two prongs of the U-shaped latch when the control circuit receives an effective control signal, meanwhile the two first springs urge the two prongs of the U-shaped latch out of the passages of the locking box.

US Pat. No. 6,442,983, to Thomas, et al., issued September 3, 2002, describes a digital electronic lock, which incorporates a digital programmable microprocessing interface capable of user-programming whereby a programmed combination opens the lock. According to one embodiment of the lock, there can be as many as approximately 10.times. 10.sup.6 possible different combinations which may be entered by the user. The operation of the lock is driven by an electric signal derived from the combination, and that electrical signal is sent to a motor assembly inside the lock body in response to which there is a disengagement of a set of locking balls from a locking bar, which with the assistance of a springing mechanism causes the locking device to open automatically.

Therefore, although existing passenger compartment gearshift locks provide some temporary protection from auto theft, the passenger compartment is relatively easily compromised. Thus, it is desirable to provide a gear box selector lock that is more difficult to access and more difficult to remove or defeat.

### Disclosure of Invention

Accordingly, it is a principal object of the present invention to provide an improved electromechanical gear box selector lock and bracket which are mounted under the hood of a car to block the gear-selection lever, and prevent gear engagement unless the lock is deactivated by pressing either a remote-control or activating a smart card or any type of electronic controller. It can be a simple switch or special electronic or biometric key. When the car is in "Park" (idle): and the gearshift is in the "Park" position, if it is an automatic transmission; or when the car is in the "Reverse" position, if it is a manual transmission, with the engine off for a pre-programmed time period. In order to operate the lock, a bolt is extended to either protrude through the gearbox selector lever or to a metal parasite attached firmly to the lever, or to externally block movement of the gearbox selector lever.

It is a further principal object of the present invention to provide an improved electromechanical gear box selector lock that functions both for an automatic and a manual gearbox.

It is another object of the present invention to provide an optional key controller.

All prior art devices are located in the passenger compartments, thus allowing a potential thief to operate the gearbox once he disconnects the gearshift from the bars/cables connecting the gearshift to the gearbox. By contrast, with the present invention the potential thief needs to bridge the lock itself, which is located in the most inconvenience place for a thief....he needs to work outside of the vehicle with an open hood.

In accordance with a preferred embodiment of the present invention there is provided an electromechanical vehicle theft protection device for the vehicle of a user. The device includes a screw feed nut, which extends and retracts along a screw feed bolt. The device also includes a geared motor, operable to pull and push said screw feed nut and a flexible metal cable operable to pull and push along a metal tube, thereby extending and retracting a locking pin in and out of the metal tube, and thereby releasing and blocking the gear box selector of the vehicle, wherein the electromechanical vehicle theft protection device is mounted under the hood of the vehicle, such that access to and defeat of the electromechanical vehicle theft protection device is difficult.

Additional features and advantages of the invention will become apparent from the following drawings and description.

### Brief Description of Drawings

For a better understanding of the invention in regard to the embodiments thereof, reference is made to the accompanying drawings and description, in which like numerals designate corresponding elements or sections throughout, and in which:

Fig. 1 is an engineering drawing of three orthogonal views of an electromechanical vehicle theft protection device, constructed according the principles of the present invention;

Fig. 2 is a detailed assembly drawing of the side view of Fig. 1 for an electromechanical vehicle theft protection device, constructed according the principles of the present invention;

Fig. 2a is a perspective view illustrative of Fig. 1 for an electromechanical vehicle theft protection device in the unlocked position, constructed according the principles of the present invention; and

Fig. 2b is a perspective view illustrative of Fig. 1 for an electromechanical vehicle theft protection device in the locked position, constructed according the principles of the present invention.

### Best Mode for Carrying Out the Invention

The present invention is for locking an automotive gearbox selector. The device is an electromechanical car security lock. It is installed under the hood, and operates with the carrying out of two conditions. With the gearshift in Park in an automatic gearbox and with the gearshift in Reverse in a manual gearbox together with "Engine in off," the device will lock the gear selector and will not allow the gear to switch positions unless an authorized user will signal to unarm the device.

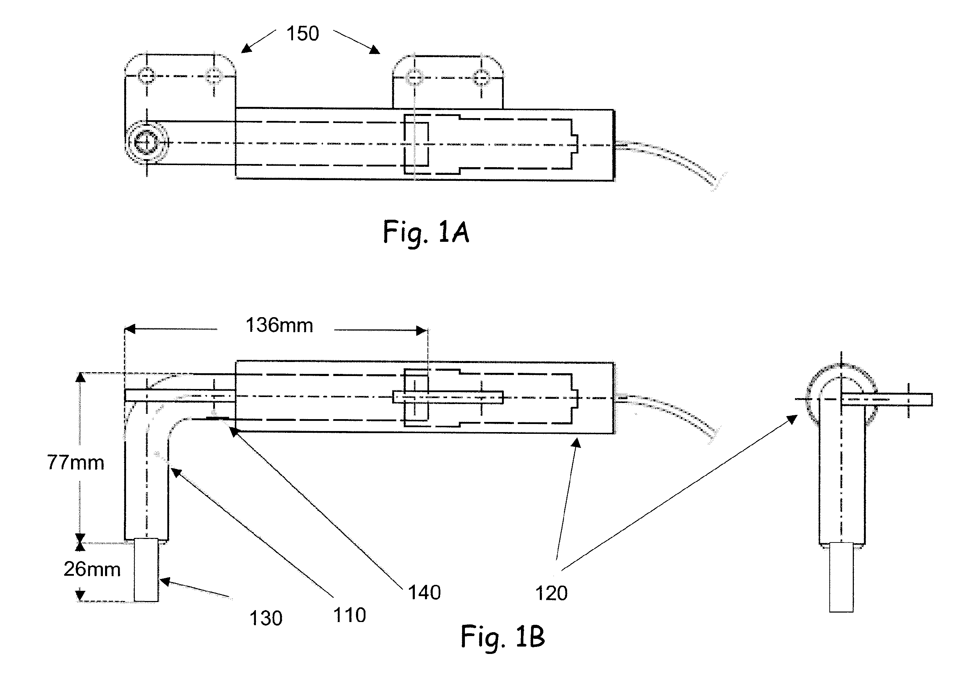

Fig. 1 is an engineering drawing of three orthogonal views of an electromechanical vehicle theft protection device, constructed according the principles of the present invention. A protection tube 110 forms a sheath for the locking pin 130. The lock shell 120 is basically a motor housing and the shear head bolt 140 cannot be unscrewed, but must be sheared off in order to begin to remove the device. Also shown are mounting brackets 150. Dimensions shown are by way of non-limiting example.

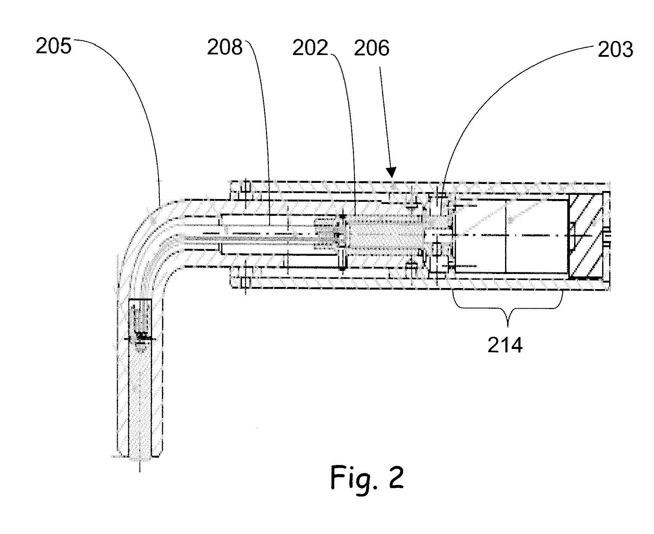

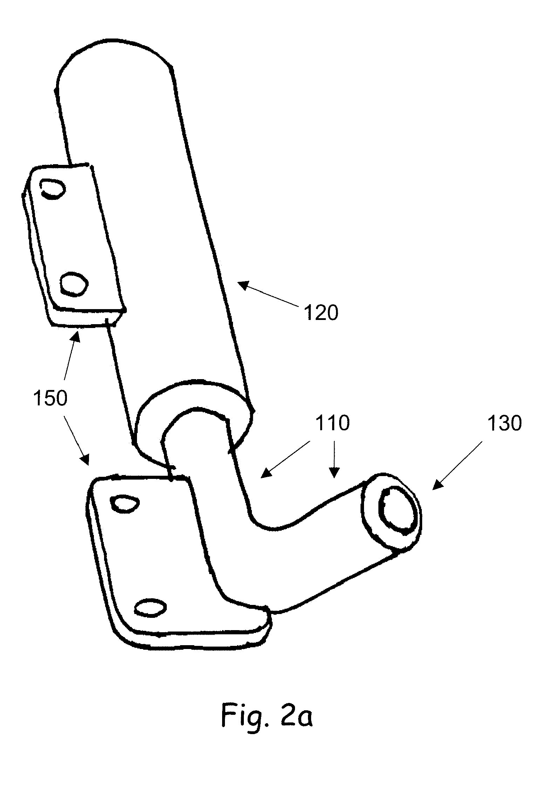

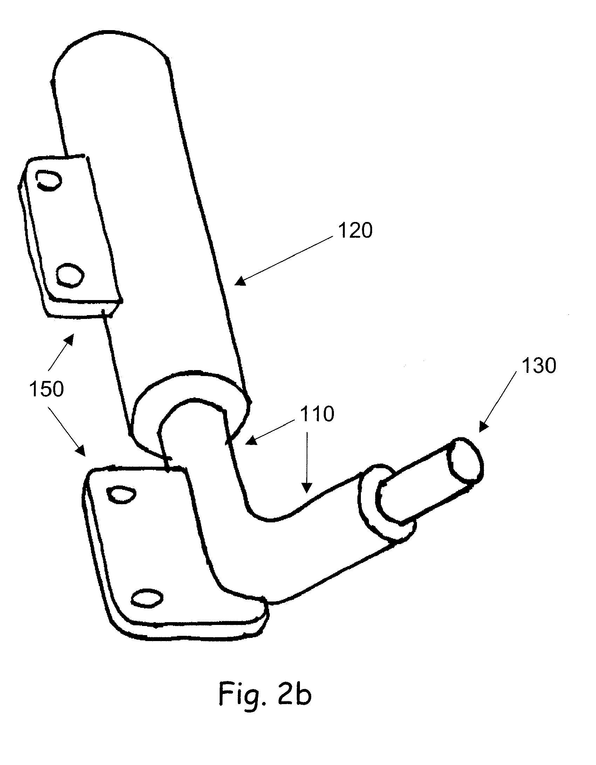

Fig. 2 is a detailed assembly drawing of the side view of Fig. 1 for an electromechanical vehicle theft protection device, constructed according the principles of the present invention.

The present invention provides for two phases of operation: (1) activating and (2) deactivating.

Activating

When the user is stopped in his vehicle, he turns the engine off and places the gearshift in the "Park" position when the vehicle is equipped with an automatic gearbox, or in the "Reverse" position when the vehicle is equipped with a manual gearbox. The device, at this point, receives an indication that all the conditions are ready for the lock to activate.

The device will activate in a pre-programming time frame. When the time to activate is so indicated, the geared DC motor 214 will turn and it will push the screw feed nut 202 forwards. The travel of nut 202 will end when the screw feed bolt 203 will reach the end of a specially designed slate (not shown) in lock shell device housing 120. The device construction and components are all hidden and are preferably not available to the user. Thus, the flexible metal cable 208 is pushed along the metal tube 205 for a distance of approximately 2.5 cm. This travel allows locking pin 130 to go out of metal tube 205 and to block the gear box selector.

In this position the device is armed and an electronic signal could activate any type of immobilizer and/or alarm system and/or tracking system which is considered as a secondary anti-theft system to the device of the present invention.

Deactivating

When the user is approaching the vehicle he needs to use an approved access control unit, such as a proximity remote or a Dallas coin or a remote control or voice or fingerprints etc., that the device was pre-programmed to recognize. Using such a control unit will first deactivate the immobilizer and/or alarm system and/or tracking system, if such exists, and/or hood lock, and which is considered as a secondary anti-theft system to the device.

At the same time it will activate DC motor 214, which will pull nut 202 backwards in the direction into the vehicle passenger compartment. The travel of nut 202 will end when screw 203 reaches the end of the aforementioned specially designed slate in housing 120. Again, the travel distance is approximately 2.5 cm. While nut 202 is travelling backwards it is pulling flexible cable 208 in the same direction.

While flexible cable 208 is travelling backwards it is pulling locking pin 130 in the same direction into metal tube 205. Thus, the gear box selector can be freed for use.

Fig. 2a is a perspective view illustrative of Fig. 1 for an electromechanical vehicle theft protection device in the unlocked position, constructed according the principles of the present invention. Protection tube 110 forms a sheath for locking pin 130, which is shown retracted. Lock shell 120 is basically a motor housing. Also shown are mounting brackets 150.

Fig. 2b is a perspective view illustrative of Fig. 1 for an electromechanical vehicle theft protection device in the locked position, constructed according the principles of the present invention. Protection tube 110 forms a sheath for locking pin 130, which is shown extended. Lock shell 120 is basically a motor housing. Also shown are mounting brackets 150.

Having described the present invention with regard to certain specific embodiments thereof, it is to be understood that the description is not meant as a limitation, since further modifications will now suggest themselves to those skilled in the art, and it is intended to cover such modifications as fall within the scope of the appended claims.

## Claims

1. An electromechanical vehicle theft protection device for the vehicle of a user, said device comprising: a geared motor, operable to pull and push a locking pin in and out of a housing, thereby releasing or blocking the gear box selector of said vehicle, wherein said electromechanical vehicle theft protection device is mounted under the hood of said vehicle, such that access to and defeat of said electromechanical vehicle theft protection device is difficult.

2. The electromechanical vehicle theft protection device of claim 1, said device comprising: a screw feed nut which extends and retracts along a screw feed bolt; a geared motor, operable to pull and push said screw feed nut; a flexible metal cable operable to pull and push along a metal tube, thereby extending and retracting a locking pin in and out of said metal tube, thereby releasing or blocking the gear box selector of said vehicle.

3. The electromechanical vehicle theft protection device of claim 1, further comprising a housing for said geared motor.

4. The electromechanical vehicle theft protection device of claim 1, further comprising at least one mounting bracket.

5. The electromechanical vehicle theft protection device of claim 1, further comprising a protection tube forming a sheath for said locking pin.

6. The electromechanical vehicle theft protection device of claim 1, further comprising a slate in said housing for said geared motor.

7. The electromechanical vehicle theft protection device of claim 1, wherein the travel of said screw feed nut will end when said screw feed bolt will reach the end of a said slate in said housing of said geared motor.

8. The electromechanical vehicle theft protection device of claim 1, wherein the device construction and components are all hidden and are preferably inaccessible to said user.

9. The electromechanical vehicle theft protection device of claim 1, further comprising at least one shear head bolt in said at least one bracket sample database to provide a substantially unique and initial identification of each of a plurality of users.

10. A method for providing theft protection for the vehicle of a user, said method comprising: mounting an electromechanical gearbox lock and bracket under the hood of said vehicle to block the gear-selection lever and prevent gear engagement; activating said gearbox lock by said user to prevent non-authorized use, such that when said vehicle is in "Park," a bolt is extended in one of the following configurations: extending into a hole in said gear selector lever of said vehicle; and extending externally to said gear selector lever to block movement of said gear selector lever; and deactivating said gearbox lock when said user is ready to operate said vehicle by one of the following actions: pressing a remote proximity control; and activating a smart card.
